# EUROPÄISCHE PATENTSCHRIFT

(11) **EP 2 045 006 B1**
(45) Veröffentlichungstag und Bekanntmachung des Hinweises auf die Patenterteilung: **01.05.2013**
(21) Anmeldenummer: 07019249.7
(22) Anmeldetag: 01.10.2007
(51) Int. Cl.: B01J 19/24, F28D 9/00

(54) **Reaktor oder Wärmeüberträger mit Abstandshaltern und Thermoblechen zur Durchführung von Reaktionen mit starker Wärmetönung**
Reactor or heat exchanger with distancers and thermal sheets for performing reactions with strong heat generation
Réacteur ou caloporteur doté d'une entretoise et de tôles thermique pour l'exécution de réactions avec une chaleur de réaction élevée

(43) Veröffentlichungstag der Anmeldung: 08.04.2009
(73) Patentinhaber: DEG Engineering GmbH, 45881 Gelsenkirchen (DE)
(72) Erfinder: Marold, Freimut Joachim, 46282 Dorsten (DE)
(74) Vertreter: Best, Michael

(56) Entgegenhaltungen:
- EP-A- 1 147 807
- WO-A-2005/009608
- DE-A1- 19 725 378
- US-A- 6 127 571

## Beschreibung

Die vorliegende Erfindung betrifft einen Reaktor oder Wärmeüberträger mit im wesentlichen parallel zueinander angeordneten Thermoblechen zur Durchführung von Prozessen mit starker Wärmetönung wie in den Ansprüchen definiert, wobei der Reaktor oder Wärmeüberträger flächige Abstandshalter aufweist, die zwischen den Thermoblechen angeordnet sind.

Bei der Durchführung von katalysierten Reaktionen mit starker Wärmetönung sowie Verdampfungs- oder Kondensationsprozessen wird die Reaktionswärme häufig über einen Wärmeträger abgeführt oder zugeführt, der durch plattenförmige so genannte Thermobleche geleitet wird.

Thermobleche bestehen in der Regel aus Wärmeüberträgerplatten, deren einzelne, meistens zwei, Bleche durch Punkt- und/oder Rollschweißungen miteinander verbunden und häufig unter Verwendung hydraulischen Drucks plastisch unter Kissenbildung ausgeformt sind (Figur 1). Derartige Thermobleche sind im Stand der Technik bekannt, zum Beispiel aus der DE-A 101 08 380.

Auch Plattenreaktoren zur Durchführung von katalysierten Reaktionen sind bekannt. So offenbart die US-A 4,544,544 einen zylinderförmigen Reaktor, der durch parallele Platten und durch durchlässige Abschlüsse in Reaktionsräume aufgeteilt wird, die mit Katalysator gefüllt sind. Die parallelen Platten werden von einem Kühlmittel durchflossen. Die Anordnung der Reaktionsräume und der parallelen Wärmeaustauscherplatten ist derart, dass ein Gas zunächst in einen Reaktionsraum eintritt und nacheinander zwischen den Wärmeleitplatten hindurch in weitere, sich jeweils zwischen zwei Wärmeplatten befindenden Reaktionsräume geleitet wird.

Reaktoren insbesondere zur Durchführung von Partialoxidationen unter Verwendung von Thermoblechen sind auch in der DE-A 199 52 964, der DE-C 197 54 185, der DE-A 198 48 208 und der WO-A 01/85331, sowie in der EP 1 147 807 A2 beschrieben.

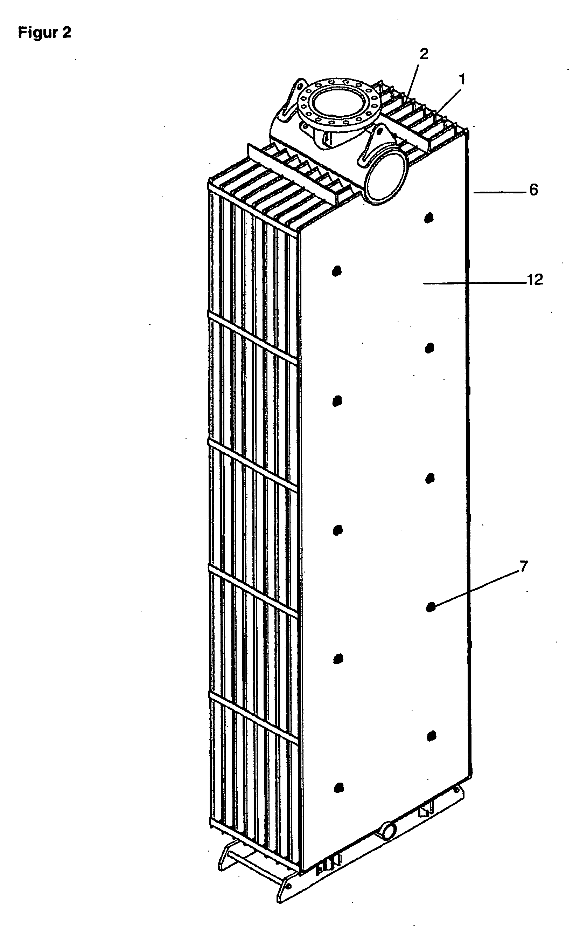

Besonders vorteilhafte Plattenreaktoren sind auch in der EP-A 1 002 571 beschrieben, die einen Reaktor zur Durchführung von Reaktionen mit starker Wärmetönung betrifft. Bei den dort beschriebenen Reaktoren werden mehrere Thermobleche, zwischen die Katalysatorpartikel eingebracht werden können, nebeneinander im Reaktorbehälter so angeordnet, so dass sie ein Thermoblechmodul aus Plattenpaketen bilden (Figur 2), in dem die Plattenpakete parallel vom Einsatzgas durchströmt werden. Ein derartiger modularer Aufbau bringt bei der Reaktionsführung große Vorteile. Insbesondere können bei derartigen Reaktoren einzelne Thermoblechmodule ausgetauscht und gewartet werden, so dass der Reaktor im Falle eines beschädigten Thermoblechmoduls oder bei Wartungsarbeiten nur für kurze Zeit abgeschaltet werden muss, während das Modul gewechselt wird. Spezielle Reaktoren ermöglichen auch das Entnehmen von einzelnen Thermoblechmodulen und die weitere Reaktionsführung in dem Reaktor ohne diese Thermoblechmodule.

Allerdings weisen die bisher bekannten Reaktoren mit parallel zueinander angeordneten Thermoblechen auch Nachteile auf. Insbesondere wichtig bei der Reaktionsführung ist die Strömungsführung und Raumgeschwindigkeit der Reaktionsgase bzw. Medien in den Reaktionsräumen zwischen den Thermoblechen.

Um eine gute Reaktionsführung zu gewährleisten, muss demnach ein präziser und für die spezielle Reaktion geeigneter Abstand zwischen den Thermoblechen vorhanden sein. Dies ist bei bekannten Reaktoren allenfalls mit erheblichem Aufwand realisierbar.

Die Befestigung der Thermobleche untereinander zu einem Modul kann auf verschiedene Weise erreicht werden, wobei beispielsweise die Ränder der Thermobleche in einem bestimmten Abstand fixiert werden können. Die Fixierung der Ränder der Thermobleche erfolgt beispielsweise durch das Anbringen von Blechstreifen. Diese Blechstreifen, z.B. 250 mm breit und mit einer Dicke, die dem gewünschten Abstand zwischen den Thermoblechen entspricht, werden an den Rändern zwischen die Thermobleche geschweißt. Über die Höhe der Thermobleche werden so viele derartige Bleche verteilt, dass eine zuverlässige Halterung gewährleistet ist. Durch das Verschweißen der Thermobleche auf diese Weise, ist allerdings eine Veränderung der Abstände zwischen den Thermoblechen bzw. der Austausch von einzelnen Thermoblechen im Nachhinein nicht mehr möglich.

Eine weitere Möglichkeit zur Fixierung der Thermobleche in einem gleichmäßigen Abstand ist die Verwendung von Bolzen, die an den Thermoblechen angebracht werden. Hierbei können auch Zylinder auf die Bolzen geschoben werden, die genau die Länge haben, die dem gewünschten Abstand der Thermobleche entspricht. Am Außenrand werden die Bolzen dann befestigt, dies geschieht durch Verschraubung oder Verschweißen.

Ein Nachteil der bekannten Reaktoren mit Thermoblechen ist, dass die Thermobleche oftmals nur an ihrem Rand mit einem rechteckigen Stabilisierungskasten verbunden sind, die gewünschte Stabilität zwischen den Thermoblechen im Inneren des Thermoblechmoduls jedoch nicht gewährleistet ist. Zwar können die Thermobleche im Inneren der Thermoblechmodule untereinander zusätzlich durch starre Distanzhalter verbunden werden, dies kann aber zu Problemen bei der Wartung der Thermoblechmodule führen, da die Thermobleche nur noch schwer voneinander getrennt werden können.

Figur 2 zeigt ein Beispiel für ein Thermoblechmodul aus Thermoblechen, wobei das Thermoblechmodul an zwei Seiten von ebenen Seitenwänden begrenzt wird. Andere Thermoblechmodule werden durch die äußeren Thermobleche selbst begrenzt. Bevorzugt werden die äußeren Thermobleche dann eben ausgebildet. Die anderen Seiten des Thermoblechmoduls sind offen (Figur 2) und ermöglichen den Austausch von Medien zwischen den Thermoblechmodulen. Je nach Anwendungsbereich können zusätzliche Außenwände angebracht werden, um beispielsweise vier Seiten des Thermoblechmoduls zu verschließen.

Eine Anordnung zweier benachbarter Thermoblechmodule mit den offenen Seiten oder einer offenen und einer geschlossenen Seite zueinander ist bei den bislang bekannten Reaktoren von Nachteil. Wenn bei dieser Ausführungsform ein Modul entnommen wird, kann an der Stelle des entnommenen Thermoblechmoduls eine Bypassströmung des Mediums, aus der offenen Seite des Thermoblechmoduls heraus, entstehen, falls der Reaktor zwischenzeitlich ohne das benachbarte Thermoblechmodul weiterbetrieben werden soll.

Thermoblechmodule müssen immer in einem gewissen Abstand zueinander angeordnet werden, damit die Entnahme eines einzelnen Thermoblechmoduls möglich wird. Dies wird derzeit dadurch realisiert, dass die Thermoblechmodule an mehreren Stellen aneinander im bestimmten Abstand befestigt und miteinander verschraubt werden.

Dies hat aber zum einen den Nachteil, dass die Thermoblechmodule Befestigungsvorrichtungen aufweisen müssen, zum anderen kommt es zwischen den Thermoblechmodulen zu teilweise erheblichen Bypassströmungen. Abdichtungen erweisen sich wegen der Möglichkeit, die Module zu entnehmen, als problematisch. Der Fachmann muss daher abwägen zwischen einer leichten Entnahme der Module (große Abstände) und geringen Bypassströmungen (geringer Abstand zwischen den Modulen).

Die Probleme bei der Wartung der Reaktoren bzw. dem Ein- und Ausbau der Thermoblechmodule entstehen insbesondere bei großen Reaktoren. Allgemein gilt, dass die Handhabbarkeit der Thermoblechmodule mit zunehmender Größe und Gewicht der Thermoblechmodule schwieriger wird.

Ein weiterer Nachteil der bekannten Rektoren ist, dass die Thermobleche bzw. Thermoblechmodule nach einer gewissen Betriebszeit des Reaktors oder Wärmeüberträgers gegebenenfalls zur Reinigung entnommen werden müssen. Eine vollständige Reinigung der entnommenen Thermobleche bzw. Thermoblechmodule ist erst nach Entnahme aus dem Reaktor möglich.

Aufgabe der vorliegenden Erfindung ist es, einen Reaktor oder Wärmeüberträger mit parallel zueinander angeordneten Thermoblechen zur Durchführung von Reaktionen mit starker Wärmetönung zur Verfügung zu stellen, der die oben dargestellten Nachteile bekannter Reaktoren nicht aufweist.

Diese Aufgabe wird durch den Gegenstand der Patentansprüche gelöst.

Die vorliegende Erfindung betriff daher einen Reaktor oder Wärmeüberträger, bevorzugt einen Reaktor, mit im wesentlichen parallel zueinander angeordneten Thermoblechen zur Durchführung von Prozessen mit starker Wärmetönung, dadurch gekennzeichnet, dass der Reaktor oder Wärmeüberträger flächige Abstandshalter aufweist, die zwischen den Thermoblechen angeordnet sind, wobei die flächigen Abstandshalter eine Fläche aufweisen, die im Bereich von 50% bis 110% der Fläche der benachbarten Thermobleche bzw. der benachbarten Seiten der Thermoblechmodule liegt. Bevorzugt umfasst der Reaktor oder Wärmeüberträger mindestens ein Thermoblechmodul, und flächige Abstandshalter, die zwischen den Thermoblechen eines Thermoblechmoduls und/oder zwischen den Thermoblechmodulen angeordnet sind. Der Ausdruck "im wesentlichen" bedeutet hierbei bevorzugt, dass die benachbarten Thermobleche einen Winkel von maximal 5° zueinander aufweisen.

Bevorzugt ist der Reaktor oder Wärmeüberträger dadurch gekennzeichnet, dass die flächigen Abstandshalter eine Fläche aufweisen, die im Bereich von 80% bis 100% der Fläche der benachbarten Thermobleche liegt bzw. der benachbarten Seiten der Thermoblechmodule liegt.

In einer weiteren Ausführungsform der Erfindung ist der Reaktor oder Wärmeüberträger dadurch gekennzeichnet, dass zumindest einer der flächigen Abstandshalter zwischen zwei Thermoblechen angeordnet ist.

Bevorzugt ist der Reaktor oder Wärmeüberträger dadurch gekennzeichnet, dass die Thermobleche Thermoblechmodule bilden und zumindest einer der flächigen Abstandshalter zwischen zwei Thermoblechmodulen angeordnet ist.

In einer weiteren Ausführungsform der Erfindung ist der Reaktor oder Wärmeüberträger dadurch gekennzeichnet, dass zumindest ein flächiger Abstandshalter als rechteckiger Rahmen ausgebildet ist, in dem Ablenkbleche vorgesehen sind.

Weiter bevorzugt ist ein derartiger Reaktor oder Wärmeüberträger der dadurch gekennzeichnet ist, dass die Ablenkbleche jalousienförmig angeordnet sind.

In einer weiteren, bevorzugten Ausführungsform der Erfindung ist der Reaktor oder Wärmeüberträger dadurch gekennzeichnet, dass zumindest ein flächiger Abstandshalter als geschlossener, quaderförmiger Kasten ausgebildet ist.

Weiter bevorzugt ist ein derartiger Reaktor oder Wärmeüberträger dadurch gekennzeichnet, dass der geschlossene, quaderförmige Kasten ein Reinigungssystem und/oder eine Vorrichtung zum Erfassen von Prozessparametern aufweist.

In einer weiteren, bevorzugten Ausführungsform der Erfindung ist der Reaktor oder Wärmeüberträger dadurch gekennzeichnet, dass der geschlossene, quaderförmige Kasten auf der Außenseite Distanzhalter aufweist.

In einer anderen bevorzugten Ausführungsform ist zumindest ein flächiger Abstandshalter als Katalysatorkorb ausgebildet.

Der Ausdruck "Prozess", so wie hier verwendet, betrifft sowohl chemische Reaktionen als auch Verdampfungs- und Kondensationsprozesse. Der Ausdruck "Reaktor" wird im Zusammenhang mit chemischen Reaktionen, der Ausdruck "Wärmeüberträger" im Zusammenhang mit Verdampfungs- und Kondensationsprozessen verwendet.

Ein Reaktor oder Wärmeüberträger im Sinne der vorliegenden Erfindung ist für Prozesse mit unterschiedlichen Medien geeignet. Der Ausdruck Medium umfasst hierbei Gase, Flüssigkeiten und dispergierte Feststoffe. Das Medium kann auch aus gasförmigen und flüssigen Anteilen bestehen. Bevorzugt sind die Medien Gase oder Gemische aus Gasen und Flüssigkeiten, am stärksten bevorzugt Gase. Bei der bevorzugten Ausführungsform als Reaktor handelt es sich bei den Medien um Reaktionsmedien, bevorzugt Reaktionsgase.

Die Verwendung von flächigen Abstandshaltern in den erfindungsgemäßen Reaktoren oder Wärmeüberträgern führt zu einer Verbesserung der Strömungsführung und der Raumgeschwindigkeit des Mediums zwischen den Thermoblechen bzw. zwischen den einzelnen Thermoblechmodulen. Beispielsweise können durch die Verwendung von flächigen Abstandshaltern, mit spezieller Oberflächenform oder mit Ablenkblechen, Verwirbelungen des Mediums erzeugt werden, wodurch der Kontakt des Mediums mit dem Katalysator und den Thermoblechen verbessert wird.

Die Raumgeschwindigkeit des Mediums in dem Katalysatorbett zwischen zwei Thermoblechen hängt von dem Abstand zwischen den beiden Thermoblechen ab. Häufig kann es vorteilhaft sein, für bestimmte Reaktionen eine größere Raumgeschwindigkeit zur Verfügung zu stellen. In einem derartigen Fall kann durch Verwendung der erfindungsgemäßen flächigen Abstandshalter der Abstand zwischen zwei Thermoblechen verringert und dadurch die Raumgeschwindigkeit wie gewünscht erhöht werden. Für eine derartige Reaktionsführung ist insbesondere ein flächiger Abstandshalter vorteilhaft, der als geschlossener, quaderförmiger Kasten ausgebildet ist, durch den hindurch kein Medium fließen kann. Die Erhöhung der Raumgeschwindigkeit des Mediums ist beispielsweise bei dem Fischer-Tropsch-Verfahren vorteilhaft.

Ein weiterer Vorteil der flächigen Abstandshalter ergibt sich dadurch, dass eine permanente Fixierung der Thermobleche untereinander oder mit den Abstandshaltern nicht unbedingt notwendig ist. Der flächige Abstandshalter erstreckt sich im wesentlichen über die gesamte Fläche der Thermobleche und gewährleistet daher über die gesamte Fläche der Thermobleche einen einheitlichen Abstand, ohne dass die Thermobleche permanent, also beispielsweise durch Verschraubung, mit dem Abstandshalter oder miteinander verbunden sein müssen. Das Befestigen der Thermobleche mit dem flächigen Abstandshalter wird allerdings im Rahmen der Erfindung nicht ausgeschlossen. Werden die Abstandshalter mit den Thermoblechen, beispielsweise durch Verschraubung verbunden, so erfolgt dies bevorzugt an den Rändern der Thermobleche. Der flächige Abstandshalter kann einfach zwischen die Thermobleche eingeschoben werden und bewirkt durch seine Ausgestaltung und gegebenenfalls an dem Abstandshalter angebrachten Distanzhaltern, dass der Abstand zwischen den Thermoblechen sich während der Reaktion nicht ändert. Durch die Berührungsstellen zwischen flächigem Abstandshalter und Thermoblech wird eine ausreichende Stabilität der Thermoblechanordnung, bei gleichzeitiger Vereinfachung der Entnahme der einzelnen Thermobleche, ermöglicht. Die flächigen Abstandshalter und die Thermobleche bzw. Thermoblechmodule können bevorzugt über Distanzhalter in Kontakt stehen, die fest mit den flächigen Abstandshaltern verbunden sind. Bevorzugterweise sind die Thermoblechmodule nicht mit den flächigen Abstandshaltern verbunden. Die Thermobleche sind bei Verwendung von Distanzhaltern bevorzugterweise nicht mit allen Distanzhaltern verbunden. Weiter bevorzugt sind die Thermobleche nicht, auch nicht über die Distanzhalter, mit den flächigen Abstandshaltern verbunden.

Die Verwendung der flächigen Abstandshalter zwischen einzelnen Thermoblechmodulen führt ebenfalls zu Vorteilen, da eine Fixierung der einzelnen Thermoblechmodule untereinander nicht mehr notwendig ist. Die flächigen Abstandshalter werden erfindungsgemäß bevorzugt nicht mit den Thermoblechmodulen verbunden sondern z.B. mit den Trägern der Thermoblechmodule. Die Thermoblechmodule brauchen daher keine Befestigungsvorrichtungen für Abstandshalter aufzuweisen. Dies erleichtert die standardisierte Herstellung und Verwendung der Thermoblechmodule.

Soll ein Modul entfernt werden, können zunächst die wesentlich leichter handhabbaren, flächigen Abstandshalter entfernt werden, die das zu entfernende Thermoblechmodul von den anderen Thermoblechmodulen trennt. Das gewünschte Thermoblechmodul kann dann leicht und ohne Verkanten entfernt werden. Auch ohne vorheriges Entfernen der flächigen Abstandshalter wird bei ihrer Anwesenheit das Entfernen der Module erleichtert.

Wird ein flächiger Abstandshalter zwischen den offenen Seiten der Thermoblechmodule angebracht, kann er die Strömungsführung zwischen den einzelnen Thermoblechmodulen verbessern oder er kann (je nach Ausgestaltung) verhindern, dass Medium aus dem benachbarten Thermoblechmodul ausströmt, so dass trotz Entnahme eines Thermoblechmoduls eine weitere Reaktionsführung ohne große Bypassströmung des Mediums möglich ist.

Wird der flächige Abstandshalter in Form eines geschlossenen Kastens ausgestaltet, können innerhalb des Kastens weitere Funktionseinheiten angebracht werden. Beispielsweise kann ein derartiger Kasten Messstellen bzw. Vorrichtungen zum Erfassen von Reaktionsparametern, beispielsweise Druck oder Temperatur enthalten. Alternativ oder zusätzlich kann der Kasten auch Medienaustrittsöffnungen aufweisen, durch die beispielsweise Reaktionshilfsmittel oder Inertgas während der Reaktion in den Reaktor zugeführt werden können. Zudem kann der flächige Abstandshalter eine Vorrichtung zum Reinigen der benachbarten Thermoblechmodule bzw. Thermobleche, beispielsweise unter Verwendung eines CIP-(Clean-In-Place) Reinigungssystems, aufweisen.

Im Nachfolgenden wird der erfindungsgemäße Reaktor oder Wärmeüberträger in Bezug auf bevorzugte Ausführungsformen näher beschrieben.

Der erfindungsgemäße Reaktor oder Wärmeüberträger umfasst Thermobleche, bevorzugt Thermoblechmodule, und mindestens einen flächigen Abstandshalter. Der Ausdruck "flächig", so wie hier verwendet, bedeutet, dass der Abstandshalter eine Fläche definiert, die ähnlich zu der Fläche eines Thermoblechs oder der Außenwand eines Thermoblechmoduls ist. Die Fläche kann durchgehend geschlossen sein, oder auch Lücken aufweisen, z.B. als Gitter, Lochblech oder jalousienförmig ausgestaltet sein, wie nachstehend beschrieben.

Die durch den flächigen Abstandshalter definierte Fläche ist im Bereich von 50% bis 110% der Fläche eines dem Abstandshalter benachbarten Thermoblechs bzw. eines benachbarten Thermoblechmoduls (falls der Abstandshalter zwischen zwei Thermoblechmodulen angebracht wird), bevorzugt im Bereich von 80% bis 110% und stärker bevorzugt im Bereich von 95% bis 100%.

In einer weiteren bevorzugten Ausführungsform definiert der Abstandshalter eine rechteckige Fläche mit einer Höhe (h), einer Breite (b) und einer Tiefe (t), wobei die Tiefe (t) im wesentlichen dem Abstand zwischen den beiden Thermoblechen bzw. den Thermoblechmodulen entspricht, zwischen die der Abstandshalter eingebracht wird. Bei dieser Ausführungsform ist die Höhe und Breite der flächigen Abstandshalter der Höhe bzw. Breite der benachbarten Thermobleche bzw. der benachbarten Seitenwände der Thermoblechmodule ähnlich. Bevorzugterweise weisen die flächigen Abstandshalter eine Höhe (h) und Breite (b) auf, die im Bereich von 50% bis 110% der Höhe bzw. Breite der benachbarten Thermobleche bzw. der benachbarten Thermoblechmodule liegt. Weiter bevorzugt liegt die Höhe (h) und die Breite (b) der flächigen Abstandshalter in einem Bereich von 80% bis 100% der Höhe bzw. Breite der benachbarten Thermobleche bzw. Thermoblechmodule. Am meisten bevorzugt liegt die Höhe (h) und Breite (b) der flächigen Abstandshalter in einem Bereich von 95% bis 100% der Höhe bzw. Breite der benachbarten Thermobleche bzw. Thermoblechmodule.

Bevorzugte Ausmaße des erfindungsgemäßen Abstandshalters betragen: Höhe (h) 500 bis 10000 mm, Breite (b) 300 bis 3000 mm und Tiefe (t) 50 bis 500 mm, wobei sowohl die Breite als auch die Höhe immer größer sind als die Tiefe.

Der flächige Abstandshalter wird in einem erfindungsgemäßen Reaktor oder Wärmeüberträger zwischen den Thermoblechen eingebracht. Es ist selbstverständlich auch möglich, dass bei einem erfindungsgemäßen Reaktor oder Wärmeüberträger flächige Abstandshalter sowohl zwischen den Thermoblechen vorgesehen sind als auch zwischen zwei Thermoblechmodulen, da hierdurch das Problem der leichteren Entnahme der einzelnen Module gelöst wird.

In einer Ausführungsform können die flächigen Abstandshalter Distanzhalter aufweisen, die fest auf den flächigem Abstandshaltern angebracht sind. Die Distanzhalter stellen bevorzugterweise einen losen Kontakt mit den Thermoblechen bzw. Thermoblechmodulen her.

Bevorzugterweise sind auf einem flächigen Abstandshalter mindestens vier, weiter bevorzugt mindestens sechs, weiter bevorzugt mindestens acht, noch weiter bevorzugt mindestens zehn Distanzhalter angebracht. Bevorzugterweise sind die Distanzhalter aus dem gleichen Material wie die Abstandshalter gefertigt und sind mit diesem verschweißt. Distanzhalter im Sinne der vorliegenden Erfindung sind jegliche Mittel, die geeignet sind, einen genauen Mindestabstand zwischen dem flächigen Abstandshalter und dem benachbarten Thermoblech einzustellen. Die Distanzhalter sind bevorzugt stiftförmig oder pyramidenförmig, wobei die Spitze von dem Abstandshalter wegweist.

Die Distanzhalter werden so auf dem flächigen Abstandshalter positioniert, dass sie den gewünschten Mindestabstand zu den Thermoblechen bzw. Thermoblechmodulen bestimmen.

Distanzhalter sind besonders dann auf den flächigen Abstandshaltern bevorzugt, falls die flächigen Abstandshalter zwischen zwei Thermoblechen angebracht werden. Durch die Distanzhalter wird ein Mindestabstand zwischen dem flächigen Abstandshalter und dem Thermoblech definiert, durch den das Medium fließen kann.

In dem Fall, dass die flächigen Abstandshalter zwischen zwei Thermoblechmodulen angebracht sind, weist der flächige Abstandshalter bevorzugt keine Distanzhalter auf, da diese Distanzhalter wieder einen Freiraum zwischen Abstandshalter und Thermoblechmodul definieren würden, durch den ein Bypass auftreten könnte.

Die flächigen Abstandshalter werden bevorzugterweise nicht fest mit den Thermoblechen bzw. Thermoblechmodulen verbunden. Im Gegensatz dazu sind die vorbekannten Distanzhalter wie Bleche, Bolzen, Zylinder usw. nur zum festen Verbinden von zwei benachbarten Thermoblechen geeignet. In dem Fall, dass die flächigen Abstandshalter zwischen zwei Thermoblechmodulen angebracht sind und dann einen Abstand zwischen diesen beiden Thermoblechmodulen herstellen, sind die flächigen Abstandshalter bevorzugt an dem gleichen Träger befestigt, an dem auch die Thermoblechmodule befestigt sind. Zur Entfernung eines Thermoblechmoduls kann bevorzugt zunächst die Befestigung des flächigen Abstandshalters an dem Träger gelöst werden. Aufgrund seines geringen Gewichts kann der flächige Abstandshalter dann leicht und mit relativ geringem Kraftaufwand zwischen den beiden Thermoblechmodulen entfernt werden. Nachdem so an allen Seiten eines Thermoblechmoduls gegebenenfalls vorhandene Abstandshalter entfernt wurden, wird das Thermoblechmodul gelöst und kann nun leicht und ohne zu verkanten ebenfalls entfernt werden. Anschließend werden die Abstandshalter wieder angebracht.

Der flächige Abstandshalter ist zwischen zwei Thermoblechen angebracht, wobei er bevorzugt einfach ohne Befestigung zwischen die beiden Thermobleche eingeschoben wird und lose auf der Halterung liegt, die die beiden Thermobleche hält. Er kann im Bedarfsfall einfach wieder zwischen den beiden Thermoblechen herausgezogen werden. Während er zwischen den beiden Thermoblechen vorhanden ist, kann er, je nach Ausgestaltung, verschiedene Funktionen erfüllen. Beispielsweise kann er zu einer besseren Verwirbelung des Mediums zwischen den Thermoblechen führen, er kann das Volumen zwischen den Thermoblechen verringern und dadurch zu einer größeren Raumgeschwindigkeit führen, oder er kann als Gehäuse für weitere Funktionseinheiten wie Messfühler, Reinigungsvorrichtungen, etc. dienen, wie es bereits vorstehend beschrieben wurde.

Die Abstandshalter können aus einem oder verschiedenen Materialien gefertigt werden, wobei diese Materialien eine ausreichende Beständigkeit bei den Reaktionsbedingungen aufweisen müssen, insbesondere gegenüber dem Medium. Besonders geeignet sind korrosionsfeste Edelstähle und Nickellegierungen.

In einer bevorzugten Ausführungsform, die mit anderen Ausführungsformen in einem Reaktor oder Wärmeüberträger kombiniert werden kann, ist der flächige Abstandshalter als Rahmen ausgebildet, der bevorzugt rechteckig ist. Bevorzugterweise weist ein derartiger (rechteckiger) Rahmen Ablenkbleche auf, die aus einem geeigneten Material, bevorzugterweise aus dem gleichen Material wie der (rechteckige) Rahmen angefertigt sind. In einer Ausführungsform wird der (rechteckige) Rahmen durch zwei Platten, die auf jeder Seite durch zwei Stangen verbunden sind, gebildet. Die Ablenkbleche können z.B. mit Bohrungen versehen sein und an den Stangen des (rechteckigen) Rahmens befestigt sein. Andere Befestigungen sind ebenfalls möglich.

Bevorzugterweise werden die Ablenkbleche, die an dem (rechtwinkligen) Rahmen angebracht sind, jalousienförmig angeordnet. Jalousienförmig bedeutet hierbei, dass die Kanten der Ablenkbleche parallel zueinander angeordnet sind, die benachbarten Ablenkbleche insgesamt aber nicht parallel zueinander sein müssen, sondern einen Winkel bilden können. Die Kanten der Ablenkbleche liegen somit auf der Oberfläche eines gedachten Kastens, der die einhüllende Form des flächigen Abstandshalters bildet. Diese Ausgestaltung eines flächigen Abstandhalters ist besonders dann vorteilhaft, wenn der flächige Abstandshalter für eine möglichst gute Verwirbelung des Mediums sorgen soll. Derartig ausgestaltete flächige Abstandshalter werden daher bevorzugt zwischen zwei offenen Seiten zweier Thermoblechmodule angeordnet. Die flächigen Abstandshalter unterstützen dann den Übertritt von Medium von einem Modul in das andere Modul und damit eine gleichmäßigere Reaktionsführung.

Bevorzugt sind die Ablenkbleche in gleichmäßigen Abständen zueinander angeordnet.

In einer bevorzugten Ausführungsform der jalousienförmigen Anordnung der Ablenkbleche sind die Ablenkbleche einander paarweise zugeneigt. Die Anordnung bzw. Ausrichtung der Ablenkbleche hängt von der gewünschten Strömungsführung des Mediums ab.

Weiterhin bevorzugt können derartig ausgestaltete flächige Abstandshalter auch zwischen zwei Thermoblechen angeordnet sein und können bei dieser Anordnung eine vorteilhafte Verwirbelungen des Mediums im Reaktionsraum erzeugen, die den Weg des Mediums durch den Reaktionsraum verlängern bzw. den Kontakt des Mediums mit dem Thermoblech verbessern. Bei gerader Strömungsführung des Mediums kann es zu einer höheren Reaktionstemperatur an den von den Thermoblechen am weitesten entfernten Stellen kommen. Dies kann durch die Ablenkbleche verhindert werden.

Die Ablenkbleche dienen somit bevorzugt auch als Strömungsbrecher.

In einer anderen Ausführungsform sind die flächigen Abstandshalter in Form eines geschlossenen Kastens ausgebildet. Die Wände, die hierbei den geschlossenen Kasten bilden, sind bevorzugterweise aus dem Material, wie oben für die flächigen Abstandshalter angegeben, angefertigt. Bevorzugterweise ist der geschlossene Kasten durch Verschweißungen gasdicht abgeschlossen. Diese Ausgestaltung des flächigen Abstandshalters als geschlossener Kasten ist insbesondere auch deshalb vorteilhaft, weil in dem flächigen Abstandshalter bei dieser Ausgestaltung zusätzliche Funktionen vorgesehen werden können. So können in dem geschlossenen Kasten beispielsweise Vorrichtungen vorgesehen sein, die Reaktionsparameter erfassen und weiterleiten, oder auch ein Reinigungssystem vorgesehen sein. In diesen Fällen enthält der Kasten Anschlüsse für Messfühler bzw. Öffnungen, z.B. Düsen, zur Durchführung der Reinigungsfunktion. In einer bevorzugten Ausführungsform enthält der geschlossene Kasten daher auch Medieneintritts- bzw. Medienaustrittsöffnungen, im folgenden kurz als Medienaustrittsöffnungen bezeichnet.

Die Messstellen zum Erfassen von Reaktionsparametern können im Inneren des geschlossenen Kastens angeordnet sein, wobei die Wände des geschlossenen Kastens an geeigneten Stellen durchbrochen sein können, um einen Kontakt zwischen den Messstellen zum Erfassen der Prozessparametern und dem Inneren des Reaktors oder Wärmeüberträgers bzw. dem Medium herzustellen. Messstellen zum Erfassen von Prozessparametern sind jegliche Messgeräte, wie beispielsweise Drucksensoren, Temperatursensoren oder Gassensoren.

Medienaustrittsöffnungen im Sinne der Erfindung sind jegliche Öffnungen, die das Entnehmen bzw. Einbringen von flüssigen oder gasförmigen Stoffen oder dispergierten Feststoffen aus dem bzw. in den Reaktionsraum (also dem Bereich des Reaktors, in dem die Umsetzung erfolgt) ermöglichen. Bevorzugterweise sind die Medienaustrittsöffnungen mit einem Reinigungssystem verbunden, das beispielsweise das Einbringen einer Reinigungsflüssigkeit nach beendeter Reaktion ermöglicht. Dadurch wird es möglich, die Thermoblechmodule bzw. Thermobleche beispielsweise vor der Entnahme eines Thermoblechmoduls von störenden Verunreinigungen zu säubern. Eine Entnahme zum Reinigen kann dadurch häufig vermieden werden.

Durch die Medienaustrittsöffnungen können des Weiteren Reaktionshilfsmittel oder Inertgas in das Reaktorinnere eingebracht werden. Bevorzugterweise können die Medienaustrittsöffnungen mit einem CIP-Reinigungssystem verbunden werden. Die Medienaustrittsöffnungen können auch als Entnahmestellen von Probemengen des Mediums dienen, um beispielsweise die Reaktionsführung durch geeignete Analysemethoden zu kontrollieren.

Die Anordnung der flächigen Abstandshalter kann parallel zwischen zwei Thermoblechen, oder parallel zu den Thermoblechmodulen erfolgen. Die Anordnung des flächigen Abstandshalters kann senkrecht zu den Thermoblechen eines Moduls, jedoch parallel zu der Außenseite des benachbarten Thermoblechmoduls sein. Die flächigen Abstandshalter können an allen Außenwänden der Thermoblechmodule angeordnet sein, sie sind selbstverständlich nicht an den Seiten der Thermoblechmodule angeordnet, über die das Medium zu- und abgeführt wird.

In einer weiteren bevorzugten Ausführungsform der Erfindung sind die flächigen Abstandshalter als Katalysatorkörbe ausgebildet. Diese Katalysatorkörbe entsprechen in ihrer Form den oben beschriebenen geschlossenen Kästen, die Außenwände der Katalysatorkörbe sind aber bevorzugt gitterförmig ausgebildet, so dass der in der Regel teilchenförmige Katalysator nicht herausfallen kann, das Medium die Katalysatorkörbe aber durchströmen kann.

Im erfindungsgemäßen Reaktor oder Wärmeüberträger können gleichzeitig unterschiedliche flächige Abstandshalter verwendet werden. Bevorzugterweise werden zwischen den Thermoblechen flächige Abstandshalter in Form eines geschlossenen Kastens, rechteckigen Rahmens oder Katalysatorkorbs verwendet.

Zwischen den geschlossenen Seiten bzw. einer geschlossenen und einer offenen Seite benachbarter Thermoblechmodule werden bevorzugt flächige Abstandshalter in Form eines geschlossenen Kastens verwendet. Bevorzugterweise werden zwischen zwei offenen Seiten benachbarter Thermoblechmodule flächige Abstandshalter in Form eines rechteckigen Rahmens mit Ablenkblechen verwendet.

Bevorzugt enthält der erfindungsgemäße Reaktor oder Wärmeüberträger mindestens einen flächigen Abstandshalter zwischen zwei benachbarten Thermoblechmodulen. In einer besonders bevorzugten Ausführungsform des Reaktors oder Wärmeüberträgers befinden sich in einer Ebene der Thermoblechmodule zwischen allen Thermoblechmodulen flächige Abstandshalter.

In einer anderen, bevorzugten Ausführungsform der Erfindung weist der Reaktor oder Wärmeüberträger mindestens halb so viele flächige Abstandshalter wie Thermobleche auf. Weiter bevorzugt befinden sich zwischen allen Thermoblechen des Reaktors oder Wärmeüberträgers flächige Abstandshalter.

Die vorliegende Erfindung betrifft Reaktoren und Wärmeüberträger, bevorzugterweise Reaktoren, und wird im Folgenden anhand der Ausführung in Form eines Reaktors näher beschrieben. Die folgenden Ausführungen gelten aber analog auch für die Ausführungsform der Erfindung, die Wärmeüberträger betrifft.

Bevorzugte Ausführungsformen der Erfindung werden anhand der folgenden Figuren näher beschrieben.
Figur 1 zeigt die typische Ausgestaltung von Thermoblechen, wie sie, gegebenenfalls zusammengefasst zu einzelnen Modulen, in dem erfindungsgemäßen Reaktor vorhanden sind.
Figur 2 zeigt schematisch ein Thermoblechmodul.
Figur 3 zeigt schematisch einen Reaktor mit einzelnen Thermoblechen.
Figur 4A und Figur 4B zeigen schematisch mögliche Anordnungen von Thermoblechmodulen.
Figur 5 zeigt in schräger Aufsicht beispielhaft einen flächigen Abstandshalter in Form eines rechteckigen Rahmens mit jalousienförmig angeordneten Ablenkblechen.
Figur 6 zeigt in schräger Aufsicht einen flächigen Abstandshalter in Form eines geschlossenen Kastens mit Ablenkblechen.
Figur 7 zeigt schematisch einen Abstandshalter in Form eines geschlossenen Kastens, an dem Medienaustrittsöffnungen angebracht sind, die mit einer Reinigungsvorrichtung verbunden sind.
Figur 8 zeigt schematisch die Anordnung eines Abstandshalters in Form eines geschlossenen Kastens zwischen zwei Thermoblechen.
Figur 9 zeigt schematisch die Anordnung eines Abstandshalters in Form eines Rahmens mit jalousienförmigen Ablenkblechen (Figur 9.1) und in Form eines geschlossenen Kastens (Figur 9.2) zwischen Thermoblechmodulen.

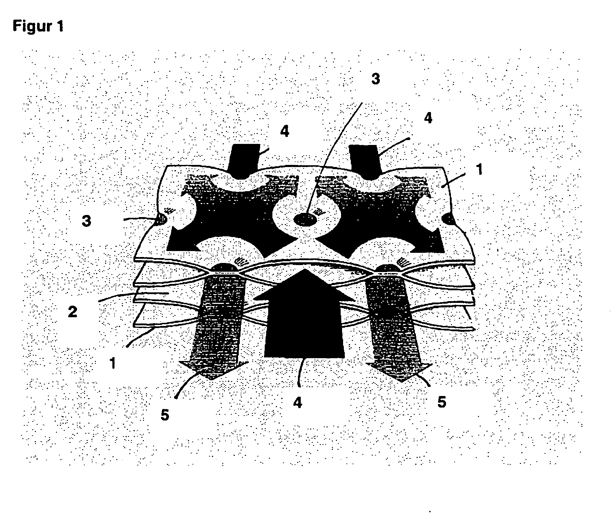

Figur 1 zeigt die typische Anordnung zweier Thermobleche 1 in einem erfindungsgemäßen Reaktor (nicht dargestellt). Ein Thermoblech ist aus zwei Blechen aufgebaut, die in der Regel an einzelnen Punkten 3 verschweißt sind. Hierdurch wird ein Innenraum vorgesehen, durch den das Kühl- bzw. Heizmittel 4 durchströmen kann. In den Zwischenräumen 2 ist in der Regel eine Katalysatorschüttung vorgesehen, die Pfeile 5 geben die Richtung des Mediums an.

Die Thermobleche insbesondere in der Ausgestaltung nach Figur 1 sind in einem erfindungsgemäßen Reaktor vorzugsweise zu Thermoblechmodulen zusammengefügt, wie sie beispielsweise in Figur 2 gezeigt sind. Die Thermoblechmodule haben in einer bevorzugten Ausführungsform eine offene Seite 6 und eine geschlossene Seite 12. Bei den Thermoblechmodulen für Reaktoren des Standes der Technik sind an der geschlossenen Seite Befestigungsvorrichtungen (beispielsweise Einschraublöcher) 7 vorhanden, die bei Verwendung eines flächigen Abstandshalters nicht mehr erforderlich sind.

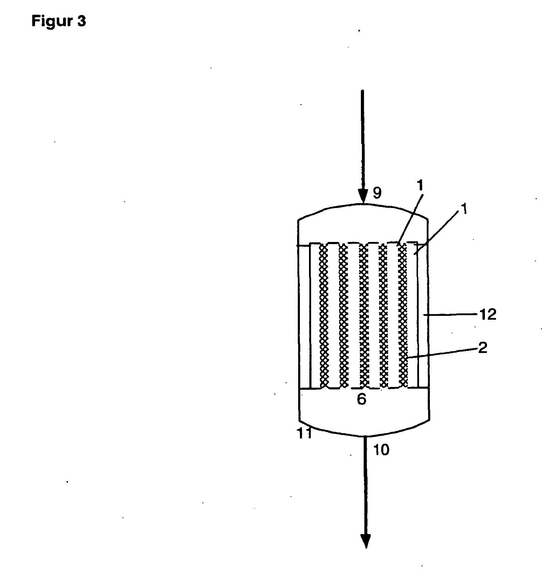

Figur 3 zeigt schematisch einen im wesentlichen zylinderförmigen Reaktor 11 mit Thermoblechen. Das Medium tritt bei 9 in den Reaktor ein und bei 10 aus dem Reaktor aus. Die Abstandshalter können einerseits zwischen zwei Thermoblechen 1, also in dem Katalysatorbett 2, vorgesehen sein. Enthält der Reaktor mehrere Thermoblechmodule, können auch diese durch die Abstandshalter getrennt sein.

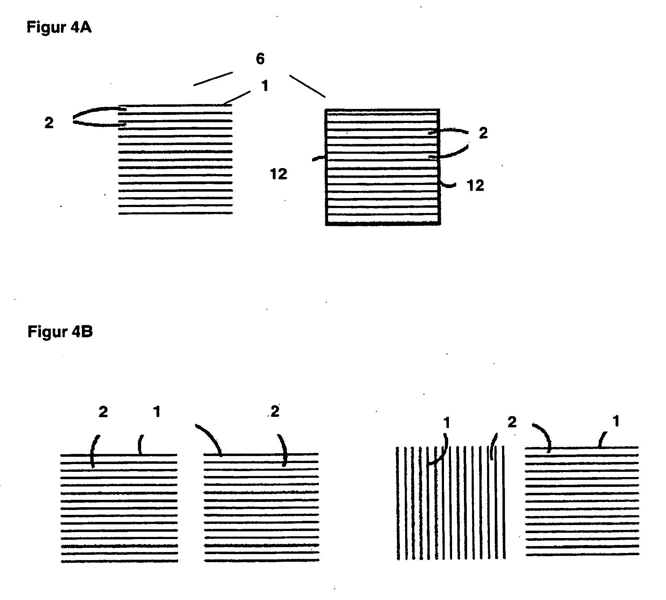

Figur 4A zeigt die Anordnung der Thermobleche 1 zu Thermoblechmodulen 6 in Draufsicht. Ohne zusätzliche Außenwände weist das Thermoblechmodul vier offene Seiten und zwei geschlossene Seiten auf (linkes Thermoblechmodul). Das Thermoblechmodul kann aber auch zusätzliche Außenwände 12 aufweisen. Das rechte Thermoblechmodul in Abbildung 4A besitzt vier geschlossene Außenwände 12.

Figur 4B zeigt die Positionierung der Thermoblechmodule 6 zueinander. Hierbei ist eine Anordnung über die offenen Seiten (ersten beiden Thermoblechmodule von links), über eine offene und eine geschlossene Seite bzw. Außenwand (drittes und viertes Thermoblechmodul) oder über zwei geschlossene Seiten bzw. Außenwände (nicht dargestellt) möglich.

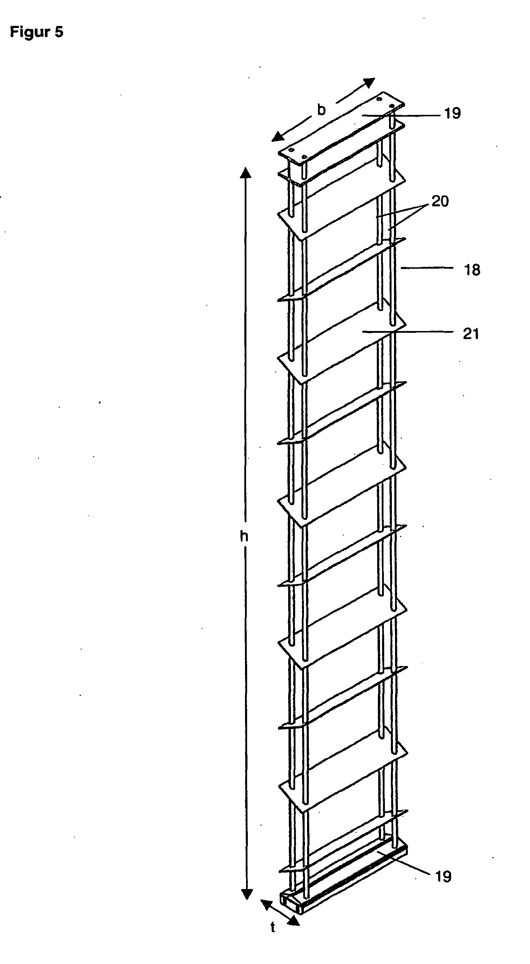

Figur 5 zeigt einen bevorzugten, flächigen Abstandshalter 18. Hierbei bilden die Platten 19 und die Stangen 20 einen rechteckigen Rahmen. In diesem Rahmen sind Ablenkbleche 21 angeordnet. Die Ablenkbleche 21 sind bevorzugt jalousienförmig geneigt. Wird ein derartiger Abstandshalter beispielsweise zwischen zwei Thermoblechmodule angeordnet, wie sie in Figur 4B links gezeigt sind, so dass die offenen Seiten zweier Thermoblechmodule jeweils an den Abstandshalter angrenzen, sorgt der Abstandshalter durch die jalousienförmige Anordnung der Ablenkbleche dafür, dass das Medium vorteilhaft zwischen beiden Thermoblechmodulen gemischt wird, was für eine bessere Durchmischung des Mediums im Gesamtsystem führt. In Figur 5 sind ebenfalls die Breite (b), die Höhe (h) und die Tiefe (t) des flächigen Abstandshalters angedeutet.

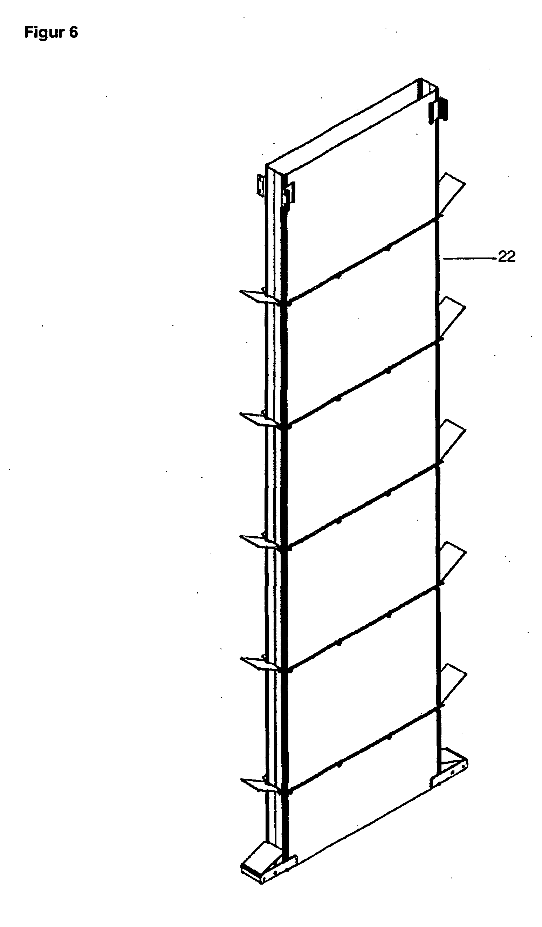

Figur 6 zeigt eine bevorzugte Ausführungsform des, flächigen Abstandshalters, der in Form eines geschlossenen Kastens 22 ausgebildet ist.

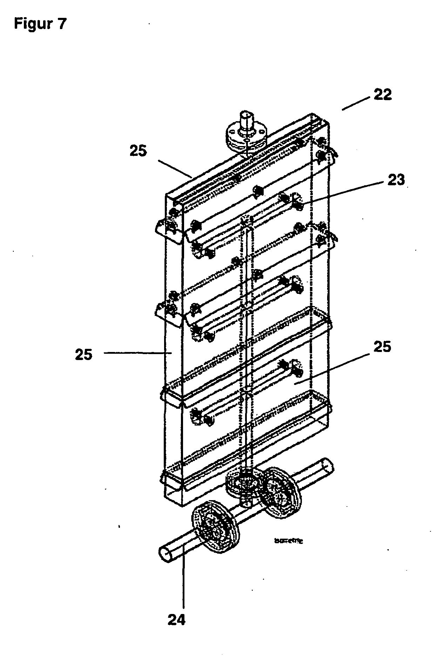

Figur 7 zeigt einen, flächigen Abstandshalter 22. Hierbei bilden die Außenwände 25 einen geschlossenen, quaderförmigen Kasten. Optional können auf dem Abstandshalter 22 Distanzhalter angebracht sein (nicht dargestellt). Der geschlossene Kasten weist Medienaustrittsöffnungen oder Messstellen 23 bzw. Vorrichtungen zum Erfassen von Prozessparametern auf, die über Rohrleitungen 24 aus dem flächigen Abstandshalter und dem Reaktor herausgeführt werden.

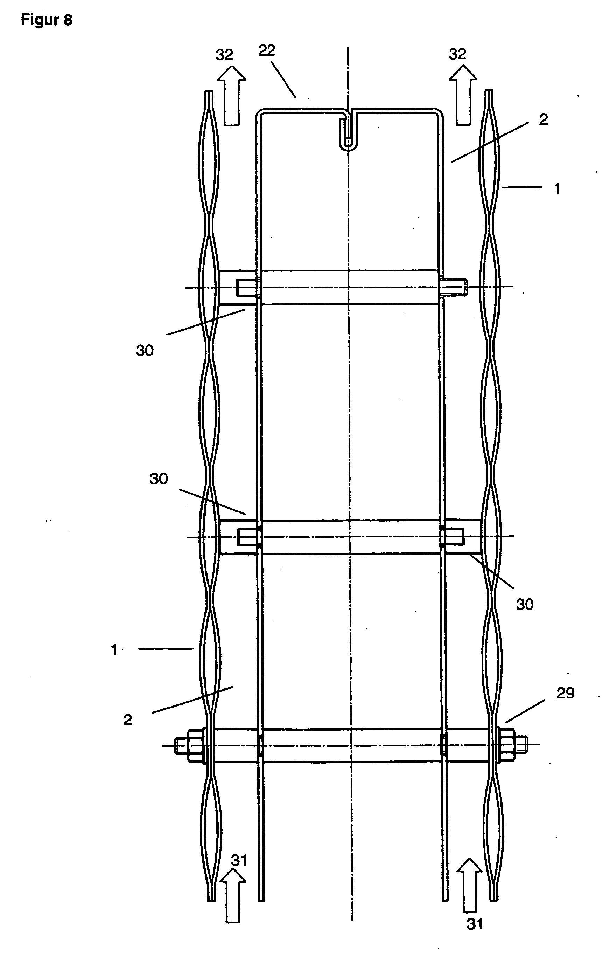

Figur 8 zeigt zwei Thermobleche 1, zwischen denen sich erfindungsgemäß ein flächiger Abstandshalter 22 befindet. Der flächige Abstandshalter 22 hat die Form eines geschlossenen Kastens und weist Distanzhalter 29 und 30 auf. Durch die Länge der Distanzhalter 30 wird der Zwischenraum bzw. Reaktionsraum 2 zwischen den Thermoblechen 1 und dem geschlossenen Kasten definiert. Die Distanzhalter 30 sind fest mit dem geschlossenen Kasten des flächigen Abstandshalters 22 verbunden, jedoch nicht mit den Thermoblechen 1. Die Distanzhalter 29 sind fest mit dem flächigen Abstandshalter 22 und den Thermoblechen 1 verbunden. Die Verwendung von Distanzhaltern 29 ist nicht erforderlich, bevorzugterweise werden nur Distanzhalter 30 verwendet. In dem Reaktionsraum 2 kann sich die Katalysatorschüttung bzw. ein Drahtkatalysator befinden. Durch die erfindungsgemäße Verwendung des flächigen Abstandshalters 22 wird der Zwischenraum zwischen den Thermoblechen 1 (ohne flächigen Abstandshalter) auf zwei schmale Reaktionsräume 2 verkleinert, wodurch die Raumgeschwindigkeit des Mediums erhöht wird. Während der Reaktion kann das Medium bzw. die Medien in den Reaktionsraum 2 beispielsweise in Richtung des Pfeils 31 eintreten und zwischen dem flächigen Abstandshalter und den Thermoblechen hindurchströmen. In Richtung des Pfeils 32 kann das Medium bzw. die Medien dann wieder austreten.

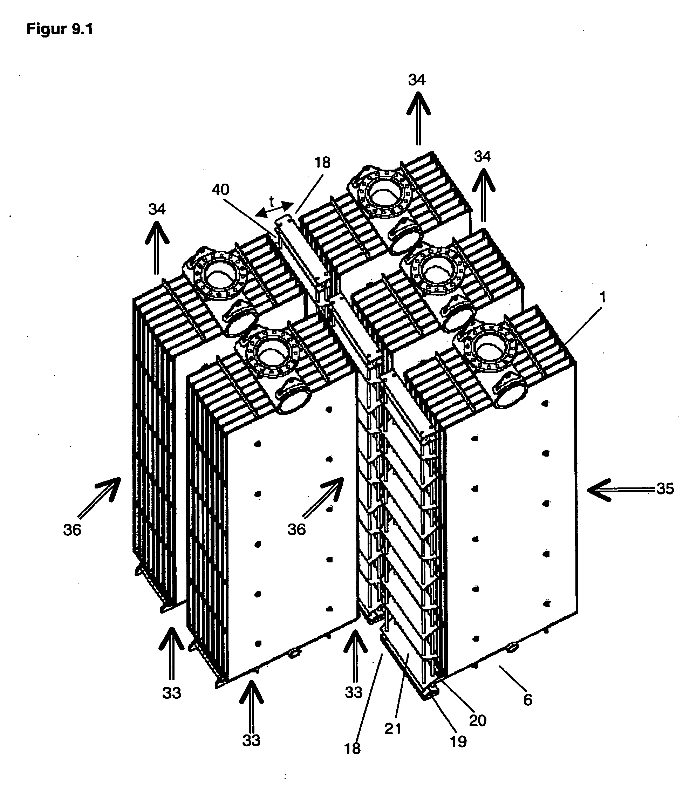

Figur 9.1 zeigt zwei Thermoblechmodule 6, zwischen denen ein, flächiger Abstandshalter 18 angeordnet ist. Der flächige Abstandshalter 18 besteht aus einem rechteckigen Rahmen, der durch Platten 19 und Stangen 20 gebildet wird. In diesem rechteckigen Rahmen sind die Ablenkbleche 21 jalousienförmig angeordnet. Das Medium kann beispielsweise bei Pfeil 33 von unten in die Thermoblechmodule 6 und in den Zwischenraum 40 zwischen den Thermoblechmodulen 6 einströmen. Bei den Pfeilen 34 kann das Medium wieder aus den Thermoblechmodulen 6 und dem Zwischenraum 40 zwischen den Thermomodulen herausströmen. Medium, das sich beispielsweise in Richtung der Pfeile 35 oder 36 bewegt, strömt aus den offenen Seiten der Thermoblechmodule 6 heraus, in den Zwischenraum 40 hinein und wird dort von dem flächigen Abstandshalter 18 verwirbelt. Der flächige Abstandshalter 18 kann eine Tiefe (t) aufweisen, so das der Zwischenraum 40 zwischen den Thermoblechmodulen 6 vollständig ausgefüllt wird. Dadurch verhindert der flächige Abstandshalter 18, dass das Medium im Sinne einer Bypassströmung in Richtung der Pfeile 34 aus dem Zwischenraum 40 zwischen den Thermoblechmodulen 6 herausströmt.

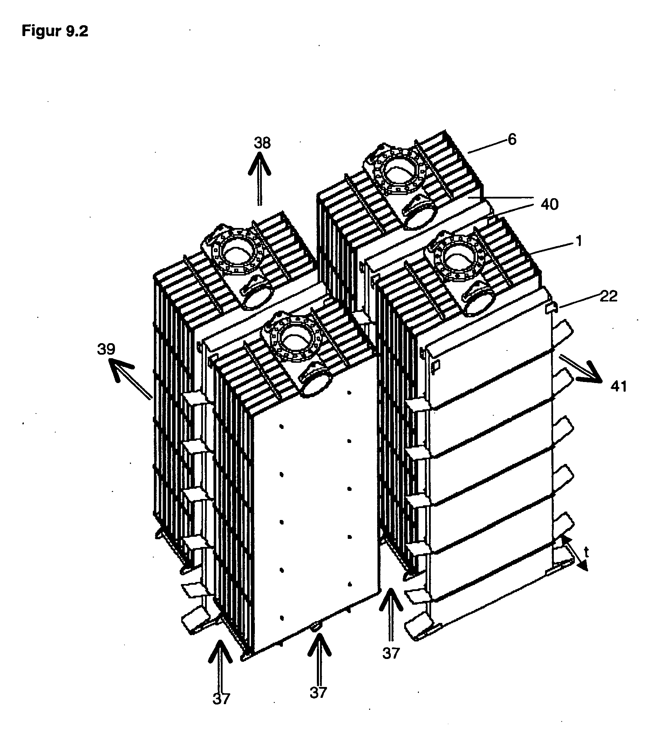

Figur 9.2 zeigt zwei Thermoblechmodule 6, zwischen denen ein flächiger Abstandshalter 22 angeordnet ist. Dieser flächige Abstandshalter 22 ist in Form eines geschlossenen Kastens ausgeformt und an den geschlossenen Seiten der Thermoblechmodule 6 angeordnet. Das Medium kann bei Pfeil 37 von unten in das Thermoblechmodul 6 einströmen und zwischen den Thermoblechen 1 hindurchströmen, so dass es bei Pfeil 38 das Thermoblechmodul 6 verlässt. Der flächige Abstandshalter 22 kann eine Tiefe (t) aufweisen, so dass er den Zwischenraum 40 zwischen den Thermoblechmodulen 6 vollständig ausfüllt. Auf diese Weise kann der flächige Abstandshalter 22 eine Bypassströmung aus den offenen Seiten der Thermoblechmodule 6 in Richtung der Pfeile 39 und 41 verhindern.

## Patentansprüche

1. Reaktor (11) oder Wärmeüberträger mit im wesentlichen parallel zueinander angeordneten Thermoblechen (1) zur Durchführung von Prozessen mit starker Wärmetönung, **dadurch gekennzeichnet, dass** der Reaktor (11) oder Wärmeüberträger flächige Abstandshalter (18, 22) aufweist, die zwischen den Thermoblechen (1) angeordnet sind, wobei die flächigen Abstandshalter (18, 22) eine Fläche aufweisen, die im Bereich von 50% bis 110% der Fläche der benachbarten Thermobleche (1) bzw. der benachbarten Thermoblechmodule (6) liegt.

2. Reaktor (11) oder Wärmeüberträger gemäß Anspruch 1, **dadurch gekennzeichnet, dass** die Thermobleche (1) Thermoblechmodule (6) bilden und flächige Abstandshalter (18, 22) zwischen den Thermoblechmodulen (6) angeordnet sind.

3. Reaktor (11) oder Wärmeüberträger gemäß Anspruch 1, **dadurch gekennzeichnet, dass** die flächigen Abstandshalter (18, 22) eine Fläche aufweisen, die im Bereich von 80% bis 100% der Fläche der benachbarten Thermobleche bzw. der benachbarten Thermoblechmodule (6) liegt.

4. Reaktor (11) oder Wärmeüberträger gemäß einem der vorangegangenen Ansprüche, **dadurch gekennzeichnet, dass** zumindest ein flächiger Abstandshalter (18) als rechteckiger Rahmen ausgebildet ist, in dem Ablenkbleche (21) vorgesehen sind.

5. Reaktor (11) oder Wärmeüberträger gemäß Anspruch 4, **dadurch gekennzeichnet, dass** die Ablenkbleche (21) jalousienförmig angeordnet sind.

6. Reaktor (11) oder Wärmeüberträger gemäß einem der vorangegangenen Ansprüche, **dadurch gekennzeichnet, dass** zumindest ein flächiger Abstandshalter (22) als geschlossener, quaderförmiger Kasten ausgebildet ist.

7. Reaktor (11) oder Wärmeüberträger gemäß Anspruch 6, **dadurch gekennzeichnet, dass** der geschlossene, quaderförmige Kasten ein Reinigungssystem und/oder Vorrichtungen zum Erfassen von Prozessparametern aufweist.

8. Reaktor (11) oder Wärmeüberträger gemäß einem der vorangegangenen Ansprüche, **dadurch gekennzeichnet, dass** der flächige Abstandshalter Distanzhalter (30) aufweist.

9. Reaktor (11) oder Wärmeüberträger gemäß einem der vorangegangenen Ansprüche, **dadurch gekennzeichnet, dass** zumindest ein flächiger Abstandshalter als Katalysatorkorb ausgebildet ist.

## Claims

1. A reactor (11) or heat exchanger with thermal plates (1) that are disposed substantially parallel to each other to carry out processes with an intensive heat tonality, **characterized in that** the reactor (11) or heat exchanger have flat spacers (18, 22) disposed between the thermal plates (1), wherein the flat spacers (18, 22) have a surface being within the range of 50% to 110% of the surface of the adjacent thermal plates (1) or the adjacent thermal plate modules (6), respectively.

2. The reactor (11) or heat exchanger according to claim 1, **characterized in that** the thermal plates (1) form thermal plate modules (6) and flat spacers (18, 22) are disposed between the thermal plate modules (6).

3. The reactor (11) or heat exchanger according to claim 1, **characterized in that** the flat spacers (18, 22) have a surface being within the range of 80% to 100% of the surface of the adjacent thermal plates or the adjacent thermal plate modules (6), respectively.

4. The reactor (11) or heat exchanger according to any one of the preceding claims, **characterized in that** at least one flat spacer (18) is formed as a rectangular frame in which deflector plates (21) are provided.

5. The reactor (11) or heat exchanger according to claim 4, **characterized in that** the deflector plates (21) are disposed like shutters.

6. The reactor (11) or heat exchanger according to any one of the preceding claims, **characterized in that** at least one flat spacer (22) is formed as a closed rectangular box.

7. The reactor (11) or heat exchanger according to claim 6, **characterized in that** the closed rectangular box has a cleaning system, and/or devices for the detection of process parameters.

8. The reactor (11) or heat exchanger according to any one of the preceding claims, **characterized in that** the flat spacer has ties (30).

9. The reactor (11) or heat exchanger according to any one of the preceding claims, **characterized in that** at least one flat spacer is formed as a catalyst basket.

## Revendications

1. Réacteur (11) ou caloporteur comprenant des tôles thermiques (1) disposées à titre essentiel parallèlement les unes aux autres pour la mise en oeuvre de processus à forte chaleur réactionnelle, **caractérisé en ce que** le réacteur (11) ou le caloporteur présente des entretoises de grande étendue (18, 22) qui sont disposées entre les tôles thermiques (1), les entretoises de grande étendue (18, 22) présentant une surface qui se situe dans la plage de 50 à 110 % de la surface des tôles thermiques voisines (1), respectivement des modules de tôles thermiques voisins (6).

2. Réacteur (11) ou caloporteur selon la revendication 1, **caractérisé en ce que** les tôles thermiques (1) forment des modules de tôles thermiques (6) et les entretoises de grande étendue (18, 22) sont disposées entre les modules de tôles thermiques (6).

3. Réacteur (11) ou caloporteur selon la revendication 1, **caractérisé en ce que** les entretoises de grande étendue (18, 22) présentent une surface qui se situe dans la plage de 80 à 100 % de la surface des tôles thermiques voisines, respectivement des modules de tôles thermiques voisins (6).

4. Réacteur (11) ou caloporteur selon l'une quelconque des revendications précédentes, **caractérisé en ce qu'**au moins une entretoise de grande étendue (18) est réalisée sous la forme d'un cadre rectangulaire dans lequel on prévoit des chicanes (21).

5. Réacteur (11) ou caloporteur selon la revendication 4, **caractérisé en ce que** les chicanes (21) sont disposées à la manière d'une persienne.

6. Réacteur (11) ou caloporteur selon l'une quelconque des revendications précédentes, **caractérisé en ce qu'**au moins une entretoise de grande étendue (22) est réalisée sous la forme d'une boîte rectangulaire fermée.

7. Réacteur (11) ou caloporteur selon la revendication 6, **caractérisé en ce que** la boîte rectangulaire fermée présente un système de nettoyage et/ou des dispositifs pour l'enregistrement de paramètres opératoires.

8. Réacteur (11) ou caloporteur selon l'une quelconque des revendications précédentes, **caractérisé en ce que** l'entretoise de grande étendue présente des distanceurs (30).

9. Réacteur (11) ou caloporteur selon l'une quelconque des revendications précédentes, **caractérisé en ce qu'**au moins une entretoise de grande étendue est réalisée sous la forme d'une cage pour catalyseur.
